# EUROPEAN PATENT APPLICATION

(11) **EP 2 824 551 A1**
(43) Date of publication of application: **14.01.2015**
(21) Application number: 12870476.4
(22) Date of filing: 25.05.2012
(51) Int. Cl.: G06F 3/048

(54) **METHOD, DEVICE, AND SYSTEM FOR CONTROLLING COMPUTER TERMINAL**

(30) Priority: 07.03.2012 CN 201210058021
(71) Applicant: ZTE Corporation, Shenzhen, Guangdong 518057 (CN)
(72) Inventor: ZHAO, Kai, Shenzhen Guangdong 518057 (CN); HOU, Fangxi, Shenzhen Guangdong 518057 (CN); MA, Lei, Shenzhen Guangdong 518057 (CN)
(74) Representative: Deambrogi, Edgardo
(86) International application number: PCT/CN2012/076105
(87) International publication number: WO 2013/131327

(57) **Abstract**

A method, apparatus and system for controlling a computer terminal are provided. In the method, a touch on a touch-sensitive display of a hand-held electronic terminal is detected. It is judged whether a touch posture of the touch matches with a preset touch posture; and if the touch posture of the touch matches with the preset touch posture, a control command corresponding to the touch posture is generated and sent to the computer terminal, wherein the control command is used for controlling the computer terminal to execute a click operation of a mouse and/or a movement operation of a mouse cursor. Through the present invention, the mouse function is implemented by using the hand-held electronic terminal without increasing the cost of hardware, thereby improving the user experience of the hand-held electronic terminal.

## Description

### Technical Field

The present invention relates to the field of communications, and more particularly to a method, apparatus and system for controlling a computer terminal.

### Background

As a mobile communication terminal product, the mobile phone is playing an increasingly important role in the daily life of people, and is used by more and more people. With the continuous enhancement of the mobile phone product, besides the basic communication function, more and more other functions are applied to the mobile phone, such as internet connection function, camera function, music playing function and compass function. With these additional functions, a mobile phone may achieve multiple purposes so as to effectively improve the utilization of resources. In another aspect, the number of computer users is also increasing. If a mouse function is added to a mobile phone, resources may be saved, the trouble of carrying a mouse during a business trip or during mobile office work may be avoided, convenience may be brought to the daily office work, particularly the mobile office work of a computer user, and the user experience of the mobile phone user may be increased.

At present, a solution for combining a mouse with a mobile phone is provided in the related art. For example, in a method for implementing a mouse function with a mobile phone in the related art, a mouse module on a touch-screen phone is connected to a Personal Computer (PC) to load the mouse function of the touch-screen phone; a mouse input interface is displayed on the display screen of the touch-screen phone; an operation instruction is generated by the operation on the touch screen in combination with the action of the touch-screen phone, and the operation instruction is converted into the key value of action of a corresponding button and mouse cursor and then transmitted to the PC to complete the mouse input. In this solution, an acceleration sensor is adopted to compute the motion vector of the mouse cursor, and the function of the mouse is comprehensively implemented by operating the tilt angle of the mobile phone. Therefore, the cost of the acceleration sensor is increased, and the actual operation of the user is inconvenient due to the tilt angle required in the operation.

In another solution, an optical finger navigation module, which is included in the baseband part of the mobile phone, detects the movement of a finger of an operator to generate the corresponding mouse operation, and the mobile phone is connected to a computer to implement the function of the mouse. In this method, on the basis of the existing construction of the mobile phone, the optical finger navigation module is added to judge the movement of the finger, therefore the cost is also increased, and it is somewhat limited in the technical implementation.

At present, there is still no effective solution to solve the problems that a hand-held electronic terminal is high in cost to implement the mouse function and is inconvenient to operate as a mouse in the related art.

### Summary

To solve the problems that a hand-held electronic terminal is high in cost to implement the mouse function and is inconvenient to operate as a mouse in the related art, the embodiments of the present invention provide a method, apparatus and system for controlling a computer terminal, in order to at least solve the problems.

In one aspect, an embodiment of the present invention provides a method for controlling a computer terminal, including: detecting a touch on a touch-sensitive display of a hand-held electronic terminal; judging whether a touch posture of the touch matches with a preset touch posture; and if the touch posture of the touch matches with the preset touch posture, generating a control command corresponding to the touch posture and sending the control command to the computer terminal, wherein the control command is used for controlling the computer terminal to execute a click operation of a mouse and/or a movement operation of a mouse cursor.

In this described embodiment, the touch posture is a movement made along any direction during continuous touch on the touch-sensitive display; and generating the control command corresponding to the touch posture includes: acquiring parameter information of the movement, wherein the parameter information includes: movement distance and movement direction, or, movement distance, movement direction and movement speed; linearly increasing or decreasing the movement speed, or linearly increasing or decreasing the movement speed and the movement distance; and generating the control command according to the movement direction and the linearly increased or decreased movement speed, or according to the movement direction and the linearly increased or decreased movement speed and movement distance.

In this described embodiment, when the touch posture is click or double-click, generating the control command corresponding to the touch posture includes: acquiring a location area of the touch posture on the touch-sensitive display; and generating the control command corresponding to the location area and the touch posture.

In this described embodiment, generating the control command corresponding to the location area and the touch posture includes: if the location area is a first preset location area, generating a control command corresponding to the click or double-click of a right mouse button; and if the location area is a second preset location area, generating a control command corresponding to the click or double-click of a left mouse button.

In this described embodiment, after the control command is sent to the computer terminal, the method further includes: the computer terminal receiving the control command and executing an operation corresponding to the control command.

In this described embodiment, the touch posture is a movement made along any direction during continuous touch on the touch screen; and after the control command is sent to the computer terminal, the method further includes: the computer terminal receiving the control command, wherein parameter information includes: movement distance and movement direction, or, movement distance, movement direction and movement speed; linearly increasing or decreasing the movement speed, or linearly increasing or decreasing the movement speed and the movement distance; and moving the mouse cursor according to the movement direction and the linearly increased or decreased movement distance, or according to the movement direction and the linearly increased or decreased movement speed and movement distance.

In this described embodiment, before detecting the touch on the touch-sensitive display of the hand-held electronic terminal, the method further includes: establishing a connection with the computer terminal.

In another aspect, an apparatus for controlling a computer terminal is provided, including: a detection module, which is configured to detect a touch on a touch-sensitive display of a hand-held electronic terminal; a judgment module, which is configured to judge whether a touch posture of the touch matches with a preset touch posture; a generation module, which is configured to generate a control command corresponding to the touch posture of the touch if a judgment result of the judgment module is that the touch posture of the touch matches with the preset touch posture, wherein the generated control command is used for controlling the computer terminal to execute a click operation of a mouse and/or a movement operation of a mouse cursor; and a sending module, which is configured to send the generated control command to the computer terminal.

In this described embodiment, the touch posture is a movement made along any direction during continuous touch on the touch-sensitive display; and the generation module includes: a first acquisition unit, which is configured to acquire parameter information of the movement, wherein the parameter information includes: movement distance and movement direction, or, movement distance, movement direction and movement speed; an increasing/decreasing unit, which is configured to linearly increase or decrease the movement speed, or linearly increase or decrease the movement speed and the movement distance; and a first generation unit, which is configured to generate the control command according to the movement direction and the linearly increased or decreased movement speed, or according to the movement direction and the linearly increased or decreased movement speed and movement distance.

In this described embodiment, the touch posture is click or double-click; and the generation module includes: a second acquisition unit, which is configured to acquire a location area of the touch posture on the touch-sensitive display; and a second generation unit, which is configured to generate the control command corresponding to the location area and the touch posture.

In this described embodiment, the second generation unit is configured to generate the control command corresponding to the location area and the touch posture in the following manner: if the location area is a first preset location area, generating a control command corresponding to the click or double-click of a right mouse button; and if the location area is a second preset location area, generating a control command corresponding to the click or double-click of a left mouse button.

In this described embodiment, the apparatus further includes: an establishment module, which is configured to establish a connection with the computer terminal.

In still another aspect, a system for controlling a computer terminal is provided, including: a hand-held electronic terminal, including the apparatus provided in the described embodiment; and the computer terminal, including a receiving module, configured to receive the control command; and an execution module, configured to execute an operation corresponding to the control command.

In this described embodiment, the touch posture is a movement made along any direction during continuous touch on the touch screen; parameter information carried in the control command includes: movement distance and movement direction, or, movement distance, movement direction and movement speed; the computer terminal further includes: an increasing/decreasing unit, which is configured to linearly increase or decrease the movement speed, or linearly increase or decrease the movement speed and the movement distance; and the execution module is further configured to move the mouse cursor according to the movement direction and the linearly increased or decreased movement distance, or according to the movement direction and the linearly increased or decreased movement speed and movement distance.

Through the present invention, the hand-held electronic terminal detects a touch on the touch-sensitive display, and generates a control command corresponding to a touch posture of the touch and sends the generated control command to the computer terminal to implement the input of a mouse operating command if determining that the touch posture of the touch matches with a preset touch posture. By virtue of the above solution, the computer terminal is controlled by the hand-held electronic terminal, and the mouse function is implemented by using the hand-held electronic terminal without increasing the cost of hardware.

### Brief Description of the Drawings

The drawings illustrated here are to provide further understanding of the present invention and constitute one part of the application, and the exemplary embodiments of the present invention and the explanations thereof are intended to explain the present invention, instead of improperly limiting the present invention. In the drawings:
Fig. 1 is a diagram of a system for controlling a computer terminal according to a first embodiment of the present invention;
Fig. 2 is a diagram of a preferred system for controlling a computer terminal according to a first embodiment of the present invention;
Fig. 3 is a diagram of an apparatus for controlling a computer terminal according to a first embodiment of the present invention;
Fig. 4 is a diagram of a preferred generation module according to a first embodiment of the present invention;
Fig. 5 is a diagram of another preferred generation module according to a first embodiment of the present invention;
Fig. 6 is a diagram of another preferred apparatus for controlling a computer terminal according to a first embodiment of the present invention;
Fig. 7 is a flowchart of a method for controlling a computer terminal according to a first embodiment of the present invention;
Fig. 8 is a diagram showing the composition principle of a mobile phone circuit according to a second embodiment of the present invention;
Fig. 9 is a diagram of a mobile phone with a mouse function according to a second embodiment of the present invention;
Fig. 10 is a diagram showing the wired connection between a mobile phone and a computer terminal according to a second embodiment of the present invention;
Fig. 11 is a diagram showing the wireless connection between a mobile phone and a computer terminal according to a second embodiment of the present invention; and
Fig. 12 is a flowchart when a mobile phone serves as a mouse according to a second embodiment of the present invention.

### Detailed Description of the Embodiments

The present invention will be described below with reference to the drawings and embodiments in detail. It should be noted that, in case of no conflict, the embodiments of the application and features therein can be combined with one another.

In the related art, the cost of hardware of a hand-held electronic terminal may be increased since the hardware structure of the hand-held electronic terminal needs to be changed when a mouse function is implemented on the hand-held electronic terminal to control a computer terminal. Moreover, in the related art, the implementation method is inconvenient to operate and low in user experience. The embodiments of the present invention provide a method, apparatus and system for controlling the computer terminal. A mouse operation which is simple, convenient and flexible to control is implemented on the hand-held electronic terminal by using the touch-sensitive display and the general interface of the hand-held electronic terminal without increasing the cost of existing hardware of the hand-held electronic terminal.

### First embodiment

According to an embodiment of the present invention, a system for controlling a computer terminal is provided. Through the system, a computer terminal can be controlled by a hand-held electronic terminal.

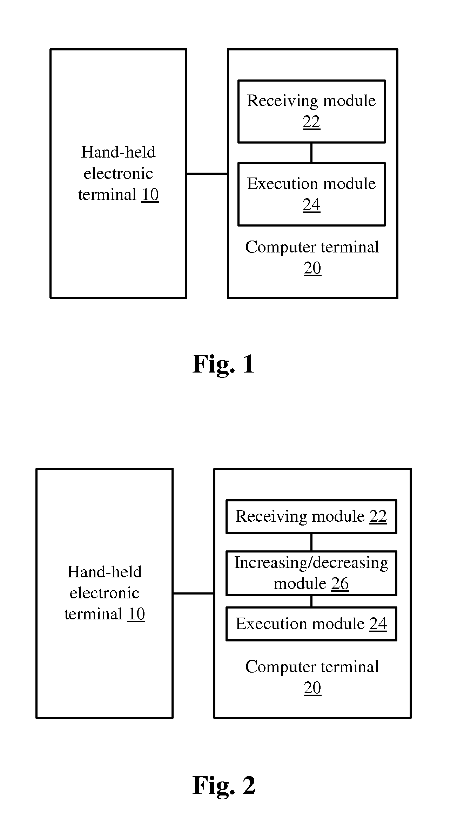

Fig. 1 is a diagram of a system for controlling a computer terminal according to a first embodiment of the present invention. As shown in Fig. 1, the system mainly includes: a hand-held electronic terminal 10 and a computer terminal 20. The hand-held electronic terminal 10 is configured to detect a touch on a touch-sensitive display of the hand-held electronic terminal 10, judge whether a touch posture of the touch matches with a preset touch posture, and generate a control command corresponding to the touch posture and send the generated control command to the computer terminal 20 if the touch posture of the touch matches with the preset touch posture. In the described embodiment, the control command may be used for controlling the computer terminal 20 to execute a click operation of a mouse and/or a movement operation of a mouse cursor. The computer terminal 20 is configured to receive the control command from the hand-held electronic terminal 10 and execute an operation corresponding to the control command.

Through the embodiment of the present invention, the hand-held electronic terminal detects the touch on the touch-sensitive display, and generates a control command corresponding to the touch posture and sends the generated control command to the computer terminal if determining that the touch posture of the touch matches with the preset touch posture. The computer terminal receives the control command and executes the operation corresponding to the received control command. The computer terminal is controlled by the hand-held electronic terminal, and the mouse function is implemented by using the hand-held electronic terminal without increasing the cost of hardware.

In the embodiment of the present invention, as shown in Fig. 1, the function of the computer terminal 20 may be implemented by a receiving module 22 and an execution module 24. In the described embodiment, the receiving module 22 is configured to receive a control command from the hand-held electronic terminal 10; and the execution module 24 is coupled with the receiving module 22 and is configured to execute the operation corresponding to the control command. The operation executed by the execution module 24 may be mainly the mouse operation corresponding to the control command. In the described embodiment, the mouse operation includes but is not limited to the click operation of a mouse and the movement operation of a mouse cursor.

In an example implementation of the embodiment of the present invention, the touch on the touch-sensitive display may be a movement made along any direction during the continuous touch on the touch-sensitive display, and this may implement the movement operation of the mouse cursor. The hand-held electronic terminal 10 detects that the touch posture is the movement made along any direction during the continuous touch on the touch-sensitive display, acquires the parameter information of the movement, and generates a control command according to the parameter information to control the computer terminal 20 to execute the movement operation of the mouse cursor. In the described embodiment, the acquired parameter information may include movement distance and movement direction, and may further include movement speed. The hand-held electronic terminal 10 generates the control command according to the movement distance and the movement direction (in another example, the hand-held electronic terminal 10 may generate the control command according to the movement distance, the movement direction and further the movement speed), and sends the generated control command to the computer terminal 20. The receiving module 22 of the computer terminal 20 receives the generated control command and triggers the execution module 24 to execute the movement operation of the mouse cursor according to the movement direction, movement distance and movement speed indicated by the control command.

As a portable electronic device (such as a mobile phone), the hand-held electronic terminal has a smaller display than that of a computer terminal and thus has rather limited movement distance. When the touch medium moves for a certain distance on the display of the hand-held electronic terminal, the movement distance of the mouse cursor on the computer terminal is relatively small, and thus it is necessary to make movement for many times. In an example implementation of the embodiment of the present invention, when generating the control command corresponding to the touch posture, the hand-held electronic terminal acquires the parameter information of the movement, linearly processes (for example, increases or decreases) the movement distance, and generates the control command according to the linearly processed parameter information. Furthermore, the movement speed may also be processed linearly.

In another example implementation in the embodiment of the present invention, the movement parameters may also be processed linearly by the computer terminal. In this case, the hand-held electronic terminal detects that the touch posture is the movement made along any direction during the continuous touch on the touch-sensitive display, acquires the parameter information of the movement, generates a control command according to the acquired parameter information, and sends the generated control command to a computer device. The receiving device 22 of the computer terminal 20 receives the control command from the hand-held electronic terminal; the movement parameters in the control command are processed linearly; and the execution module 24 executes the movement operation of the mouse cursor according to the linearly processed parameters.

Therefore, in an example implementation of the embodiment of the present invention, the parameter information carried in the control command received by the receiving module 22 of the computer terminal 20 includes: movement distance and movement direction, or, movement distance, movement direction and movement speed. In order to process the movement parameters linearly, as shown in Fig. 2, the computer terminal 20 may further include: an increasing/decreasing module 26, which is coupled with the receiving module 22 and is configured to linearly increase or decrease the movement speed, or linearly increase or decrease the movement speed and movement distance. The execution module 24 is coupled with the increasing/decreasing module 26 and may be further configured to move the mouse cursor according to the movement direction and the linearly increased or decreased movement distance, or according to the movement direction and the linearly increased or decreased movement speed and movement distance.

In actual application, the hand-held electronic terminal or the computer terminal may linearly increase the movement parameters according to the proportional relation of the display. For example, when the display of the hand-held electronic terminal is 1/5 as large as that of the computer terminal, the hand-held electronic terminal 10 or the computer terminal 20 may increase the movement distance to 5 times its ordinary size, namely, if the touch medium moves 1 centimetre on the touch-sensitive display, the mouse cursor of the computer terminal 20 moves 5 centimetres on the computer terminal. In addition, the linear increasing times may be set as required, or, the linear increasing times may be also adjusted to the optimum value by counting the usage habit of the user.

In another example implementation of the embodiment of the present invention, in order to implement the button operation of the mouse, the touch posture may be click or double-click. When a control command corresponding to the touch posture is generated, the hand-held electronic terminal acquires the location area of the touch posture of the touch on the touch-sensitive display, and generates a control command corresponding to the location area and the touch posture. In an example implementation, the control command corresponding to the location area and the touch posture may be generated as follows: if the location area is a first preset location area, a control command corresponding to the click or double-click of the right mouse button is generated; and if the location area is a second preset location area, a control command corresponding to the click or double-click of the left mouse button is generated. The execution module 24 of the computer terminal 20 may execute the click operation of the mouse according to the control command.

In the embodiment of the present invention, in order to implement the interaction between the hand-held electronic terminal and the computer terminal, the hand-held electronic terminal 10 may be connected to the computer terminal 20 through a Bluetooth module or a Universal Serial Bus (USB) interface thereof. After the hand-held electronic terminal 10 is connected to the computer terminal 20, the driver of the hand-held electronic terminal 10 is initialized in the computer terminal 20. The touch-sensitive display of the hand-held electronic terminal 10 is configured as a touch control panel, on which a user can control the computer terminal. In an example implementation, when the hand-held electronic terminal is operated as a mouse, the display screen is not required for display. Therefore, the touch-sensitive display can be in an off blank screen state, thereby reducing the power consumption of the hand-held electronic terminal, and prolonging the standby time of the hand-held electronic terminal better.

According to an embodiment of the present invention, an apparatus for controlling a computer terminal is further provided, which may be located in the hand-held electronic terminal 10 in the embodiment above to control the computer terminal.

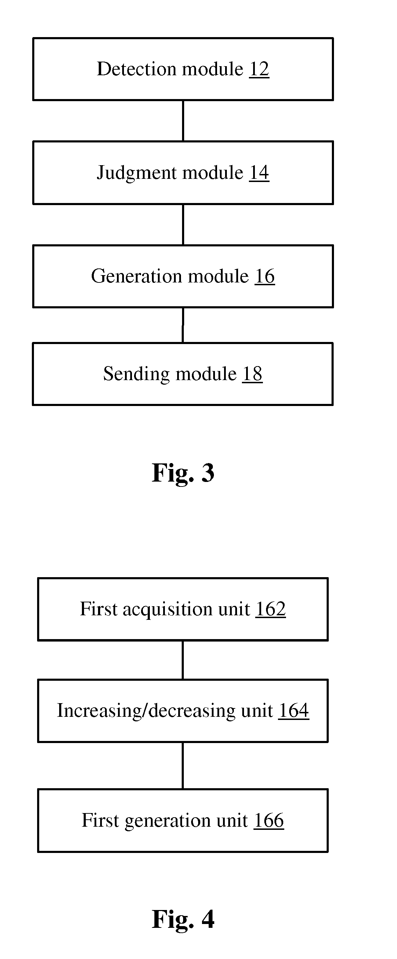

Fig. 3 is a diagram of an apparatus for controlling a computer terminal according to a first embodiment of the present invention. As shown in Fig. 3, the apparatus mainly includes: a detection module 12, a judgment module 14, a generation module 16 and a sending module 18. The detection module 12 is configured to detect the touch on the touch-sensitive display of the hand-held electronic terminal; the judgment module 14 is coupled with the detection module 12 and is configured to judge whether the touch posture of the touch matches with the preset touch posture; the generation module 16 is coupled with the judgment module 14 and is configured to generate a control command corresponding to the touch posture of the touch if the judgment result of the judgment module 14 is positive, wherein the generated control command is used for controlling the computer terminal to execute the click operation of a mouse and/or the movement operation of a mouse cursor; and the sending module 18 is coupled with the generation module 16 and is configured to send the generated control command to the computer terminal.

Through the embodiment of the present invention, the detection module 12 in the hand-held electronic terminal detects the touch on the touch-sensitive display, and if the judgment module 14 judges that the touch posture of the touch matches with the preset touch posture, the generation module 16 generates a control command corresponding to the touch posture and the sending module 18 sends the generated control command to the computer terminal to complete the input of a mouse operating command. Therefore, the computer terminal is controlled by the hand-held electronic terminal, and the mouse function is implemented by using the hand-held electronic terminal without increasing the cost of hardware.

In another example implementation in the embodiment of the present invention, the movement parameters may be processed linearly by the computer terminal. In the apparatus shown in Fig. 3, the detection module 12 detects that the touch posture is the movement made along any direction during the continuous touch on the touch-sensitive display, the generation module 16 acquires the parameter information of the movement, generates a control command according to the acquired parameter information, and sends the generated control command to the computer terminal. A receiving device 22 of the computer terminal 20 receives the control command from the hand-held electronic terminal; an increasing/decreasing module 26 linearly processes the movement parameters in the control command; and the execution module 24 executes the movement operation of the mouse cursor according to the linearly processed parameters.

Or, in another example implementation of the embodiment of the present invention, the parameter information of the movement may also be linearly processed by the hand-held electronic terminal and then sent to the computer terminal. For example, the processing above may be executed by the generation module 16. As shown in Fig. 4, in the example implementation, the generation module 16 mainly includes: a first acquisition unit 162, which is configured to acquire the parameter information of the movement, wherein the parameter information mainly includes: movement distance and movement direction, or, movement distance, movement direction and movement speed; an increasing/decreasing unit 164, which is coupled with the first acquisition unit 162 and is configured to linearly increase or decrease the movement speed, or linearly increase or decrease the movement speed and the movement distance; and a first generation unit 166, which is coupled with the increasing/decreasing unit 164 and is configured to generate the control command according to the movement direction and the linearly increased or decreased movement speed, or according to the movement direction and the linearly increased or decreased movement speed and movement distance. As a portable electronic device, the hand-held electronic terminal has a smaller display and thus has rather limited movement distance. When the touch medium moves for a certain distance on the display of the hand-held electronic terminal, the movement distance of the mouse cursor on the computer terminal is relatively small, and thus it is necessary to make movement for many times. Through this example implementation, the above problem is solved, and the user experience is improved.

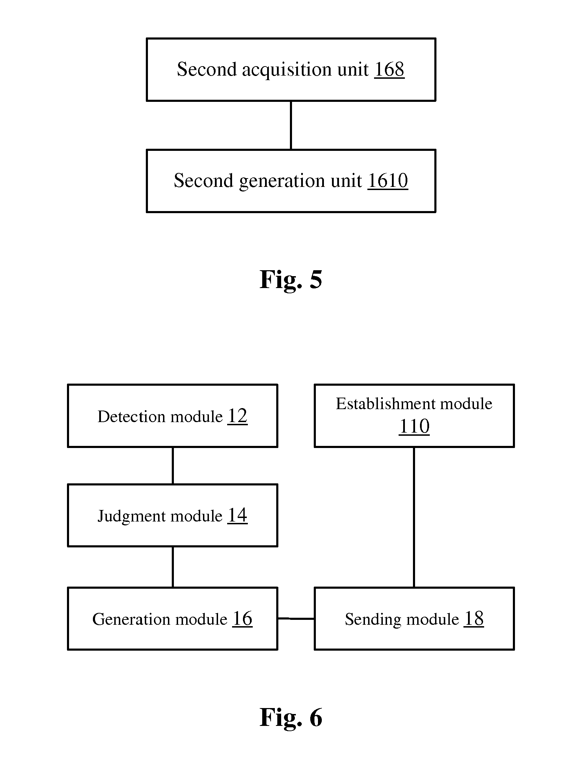

In actual application, the touch posture of the touch on the touch-sensitive display may further be click or double-click. Therefore, in another example implementation of the embodiment of the present invention, the generation module 16 may further adopt the structure as shown in Fig. 5. As shown in Fig. 5, in the example implementation, the generation module 16 mainly includes: a second acquisition unit 168, which is configured to acquire the location area of the touch posture of the touch on the touch-sensitive display, and a second generation unit 1610, which is coupled with the second acquisition unit 168 and is configured to generate a control command corresponding to the acquired location area and the touch posture. In an example implementation, the second generation unit 1610 generates the control command corresponding to the touch posture and the location area as follows: if the location area is a first preset location area, a control command corresponding to the click or double-click of the right mouse button is generated; and if the location area is a second preset location area, a control command corresponding to the click or double-click of the left mouse button is generated.

In the actual application, to implement the button operation of the mouse, the whole operation area of the touch-sensitive display may be divided into left and right symmetric areas. The right half area (the first location area) may be designed as the right button area of the mouse, while the left half area (the second location area) may be designed as the left button area of the mouse. The second generation unit 1610 may judge whether the click/double-click input operation of left or the right mouse button is carried out according to the click area. Specifically, if the location area is the right half area, a control command corresponding to the single/double-click of the right mouse button is generated; and if the location area is the left half area, a control command corresponding to the single/double-click of the left mouse button is generated. The whole operation area of the touch-sensitive display may also be divided into an upper area and a lower area; the upper half area (the first location area) may be designed as the right button area of the mouse; and the lower half area (the second location area) may be designed as the left button area of the mouse.

Fig. 6 is a diagram of another preferred apparatus for controlling a computer terminal according to a first embodiment of the present invention. As shown in Fig. 6, the apparatus may further include: an establishment module 110, which is configured to establish connection with the computer terminal. In the actual application, the hand-held electronic terminal may be connected to the computer terminal in a wired or wireless way. For example, the hand-held electronic terminal may be connected to the computer terminal through a Bluetooth module thereof in a wireless way; and the hand-held electronic terminal may interact with the computer terminal through Bluetooth in a wireless way to complete the input of a mouse operation command. In addition, the hand-held electronic terminal may also be connected to the computer terminal through a USB interface thereof in a wired way; and the hand-held electronic terminal may interact with the computer terminal through the USB interface in a wired way to complete the input of a mouse operation command.

According to an embodiment of the present invention, a method for controlling a computer terminal is further provided. Through the system and the apparatus provided by the embodiments above, the computer terminal may be controlled by the hand-held electronic terminal.

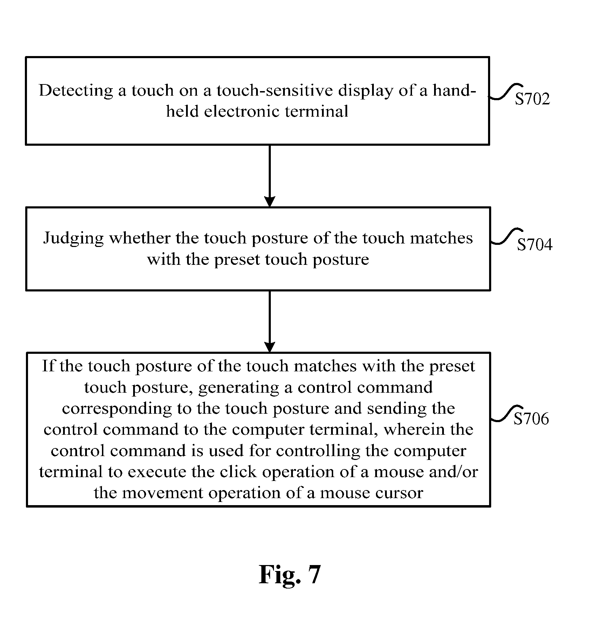

Fig. 7 is a flowchart of a method for controlling a computer terminal according to a first embodiment of the present invention. As shown in Fig. 7, the method may include the following steps (Steps 702 to 706).

Step 702: A touch on a touch-sensitive display of a hand-held electronic terminal is detected.

Step 704: Whether the touch posture of the touch matches with the preset touch posture is judged.

Step 706: If the touch posture of the touch matches with the preset touch posture, a control command corresponding to the touch posture is generated and is sent to the computer terminal, wherein the control command is used for controlling the computer terminal to execute a click operation of a mouse and/or a movement operation of a mouse cursor.

Through the embodiment of the present invention, the hand-held electronic terminal detects the touch on the touch-sensitive display, and generates a control command corresponding to the touch posture and sends the generated control command to the computer terminal to complete the input of mouse operating command if determining that the touch posture of the touch matches with the preset touch posture. Therefore, the computer terminal is controlled by the hand-held electronic terminal, and the mouse function is implemented by using the hand-held electronic terminal without increasing the cost of hardware.

In the embodiment of the present invention, in order to implement the interaction between the hand-held electronic terminal and the computer terminal, the hand-held electronic terminal may be connected to the computer terminal through a Bluetooth module or a USB interface thereof. After the hand-held electronic terminal is connected to the computer terminal, the driver of the hand-held electronic terminal is initialized in the computer terminal. The touch-sensitive display of the hand-held electronic terminal is configured as a touch control panel, on which a user can control the computer terminal. In an example embodiment, when the hand-held electronic terminal is operated as a mouse, a display screen may not be required for display. Therefore, the touch-sensitive display can be in an off blank screen state, thereby reducing the power consumption of the hand-held electronic terminal, and prolonging the standby time of the hand-held electronic terminal better.

The control of the computer terminal by the hand-held electronic terminal mainly includes the control of mouse operation of the computer terminal. The mouse operation may be the click operation (click or double-click) of the mouse or the movement operation of the mouse cursor and the like. In an example implementation of the embodiment of the present invention, the touch on the touch-sensitive display may be the movement made along any direction during the continuous touch on the touch-sensitive display, so as to implement the movement operation of the mouse cursor. The hand-held electronic terminal detects that the touch posture is the movement made along any direction during the continuous touch on the touch-sensitive display, acquires the parameter information of the movement, and generates a control command according to the parameter information to control the computer terminal to execute the movement operation of the mouse cursor. In an example implementation, the acquired parameter information may include movement distance and movement direction, and may further include movement speed. The hand-held electronic terminal generates the control command according to the movement distance and the movement direction (may further including movement speed), and sends the generated control command to the computer terminal. The computer terminal receives the generated control command and executes the movement operation of the mouse cursor according to the movement direction, movement distance and movement speed indicated by the control command.

As a portable electronic device (such as a mobile phone), the hand-held electronic terminal has a smaller display than that of a computer terminal and thus has rather limited movement distance. When the touch medium moves for a certain distance on the display of the hand-held electronic terminal, the movement distance of the mouse cursor on the computer terminal is relatively small, and thus it is necessary to make movement for many times. In an example implementation of the embodiment of the present invention, when generating the control command corresponding to the touch posture, the hand-held electronic terminal acquires the parameter information, linearly processes (for example, increases or decreases) the movement distance, and generates the control command according to the linearly processed parameter information. Furthermore, the movement speed may also be processed linearly.

In an example implementation, to cater for the usage habit of the user, the touch screen of the mobile phone may be planned and configured as an X axis and a Y axis. The movement of a finger in the direction of X axis on the touch screen becomes the horizontal movement of the mouse on the computer terminal when mapped to the display screen of the computer terminal, while the movement of the finger in the direction of Y axis on the touch screen becomes the vertical movement of the mouse on the computer terminal when mapped to the display screen of the computer terminal. In the same manner, movement in different directions and angles on the touch screen of the mobile phone is implemented, so that the movement on the touch screen of the mobile phone may then be mapped to the movement of the mouse cursor with the corresponding movement distance and speed in the corresponding direction on the display screen of the computer terminal.

In another example implementation in the embodiment of the present invention, the movement parameters may be processed linearly by the computer terminal. Meanwhile, the hand-held electronic terminal detects that the touch posture is the movement made along any direction during the continuous touch on the touch-sensitive display, acquires the parameter information of the movement, generates a control command according to the acquired parameter information, and sends the generated control command to the computer terminal. The computer terminal receives the control command from the hand-held electronic terminal, linearly processes the movement parameters in the control command, and executes the movement operation of the mouse cursor according to the linearly processed parameters.

In the actual application, the hand-held electronic terminal or the computer terminal may linearly increase the movement parameters according to the proportional relation of the display. For example, when the display of the hand-held electronic terminal is 1/4 as large as that of the computer terminal, the hand-held electronic terminal or the computer terminal may increase the movement distance to 4 times its ordinary size, namely, if the touch medium moves 1 centimetre on the touch-sensitive display, the mouse cursor of the computer terminal moves 4 centimetres on the computer terminal. In addition, the linear increasing times may be set as required, or, the linear increasing times may be also adjusted to the optimum value by counting the usage habit of the user.

In another example implementation of the embodiment of the present invention, in order to implement the click operation of the mouse, the touch posture may be click or double-click; and when a control command corresponding to the touch posture is generated, the hand-held electronic terminal acquires the location area of the touch posture of the touch on the touch-sensitive display, and generates a control command corresponding to the location area and the touch posture. In an example implementation, the control command corresponding to the location area and the touch posture may be generated as follows: if the location area is a first preset location area, a control command corresponding to the click or double-click of the right mouse button is generated; and if the location area is a second preset location area, a control command corresponding to the click or double-click of the left mouse button is generated. The computer terminal may execute the click operation of the corresponding mouse according to the control command.

In the actual application, to distinguish the click operation of left and right buttons of the mouse, the whole operation area of the touch-sensitive display may be divided into left and right symmetric areas. The right half area (the first location area) is designed as the right button area of the mouse, while the left half area (the second location area) is designed as the left button area of the mouse. The hand-held electronic terminal may judge whether the click/double-click operation of left or right button of the mouse is carried out according to the click area. Specifically, if the location area is the right half area, a control command corresponding to the single/double-click of the right mouse button is generated; and if the location area is the left half area, a control command corresponding to the single/double-click of the left mouse button is generated.

### Second embodiment

In the embodiment of the present invention, by taking a mobile phone as an example, a solution for controlling a computer terminal is described in the present invention. According to the embodiment of the present invention, a method for controlling a computer terminal is provided. In the method, without increasing the cost of the existing hardware of the mobile phone, the mobile phone is connected to the computer terminal in a wired or a wireless way by using several basic universal modules in the existing intelligent mobile phone through a USB interface or Bluetooth function, so as to implement the function of the mobile phone as a wired or wireless mouse of the computer terminal. The solution in the embodiment of the present invention is simple and convenient to operate and flexible to control, thereby improving the user experience of the mobile phone greatly.

In the embodiment of the present invention, the mobile phone implementing the mouse function has a touch display screen (i.e., a touch-sensitive display), a USB interface or a Bluetooth function like the exiting universal mobile phone.

After the mobile phone is connected to the computer terminal through the operation of a user, such as the Bluetooth or a USB interface, and is confirmed to enter the mouse function by the user, the driver of the mobile phone is initialized in the computer terminal. The touch display screen of the mobile phone is configured as a touch control panel, and a corresponding relationship of movement of a corresponding mouse cursor is formed between the length and width directions of the touch control panel and the display screen of the computer.

When a touch medium (such as a finger) touches and moves on the touch screen of the mobile phone, the data of movement distance, movement direction and movement speed is correspondingly converted linearly. The information carrying a movement control command is transmitted to the computer terminal through a USB interface or Bluetooth. The computer terminal converts the received related data and control command correspondingly, specifically converting the movement control command into a movement instruction for the cursor and the corresponding movement distance, movement direction and movement speed into the movement of the mouse cursor in the display screen of the computer terminal, so that the movement of the touch medium on the touch screen of the mobile phone is converted into the movement of the cursor in the display of the computer terminal.

In the example embodiment of the present invention, the linear corresponding relationship is that the mouse cursor in the display screen of the computer terminal moves horizontally when the touch medium moves horizontally on the touch screen of the mobile phone and moves vertically when the touch medium moves vertically on the touch screen of the mobile phone. In such a manner, the movement of the touch medium at any angle and any speed for any length on the touch screen may be converted linearly on the display screen of the computer terminal, so that the touch medium may operate the mobile phone to implement the movement function of the mouse cursor in the display screen of the computer terminal.

Moreover, in order to implement the click and double-click function of left button and the click function of right button of the mouse, the whole operation area of touch screen of the mobile phone may be divided into left and right symmetric areas by software by default, so as to divide click areas for the left and right buttons.

In an example implementation, the left half area is designed as the left button area of the mouse. When a finger clicks/double-clicks the area, the mobile phone may determine that the click occurs in the left half area of the whole touch screen according to the coordinate location of the click area. Because the click/double-click input operation of the left mouse button is carried out, the mobile phone transmits a corresponding operation control command for the click/double-click of the left button to the computer terminal in a wired or wireless way. The computer terminal receives the corresponding command and then controls the mouse on the display screen to carry out the click/double-click operation of the left button, so as to implement the click or double-click operation of mouse of the computer terminal.

In another aspect, the right half area of touch screen of the mobile phone is designed as a right button area, namely, when the touch medium clicks the area, the mobile phone determines that the click operation occurs in the right half area of the whole touch screen according to the relative location of the input point, and the click may be determined as the click operation of right button the mouse. Accordingly, the mobile phone may transmit a corresponding control command for the operation of the right button to the computer terminal; the computer terminal converts the command and then controls the operation of right button of the mouse on the display screen thereof, so as to implement the operation of right button of the computer terminal.

Through the embodiment of the present invention, the mobile phone is connected to the computer terminal as a mouse in a wired or wireless way; and the moving operation on the touch screen of the mobile phone and the click control in the left and right areas by a finger are converted into the input of left and right button commands of a mouse pointer on the display screen of the computer terminal, so as to implement the function of the mobile phone as the mouse of the computer terminal. In the embodiment of the present invention, unlike a universal mouse, the mobile phone implementing the mouse function does not rely on the requirement on a placement plane, thereby having a great degree of spatial freedom and being friendlier in human-computer interaction. Moreover, it is appropriate to certain ergonomics and operation habit, is highly sensitive and simple to operate when used as a mouse, adds another user experience of the mobile phone and enriches the application scenario of the mobile phone.

The embodiment of the present invention is further described below with reference to the accompanying drawings.

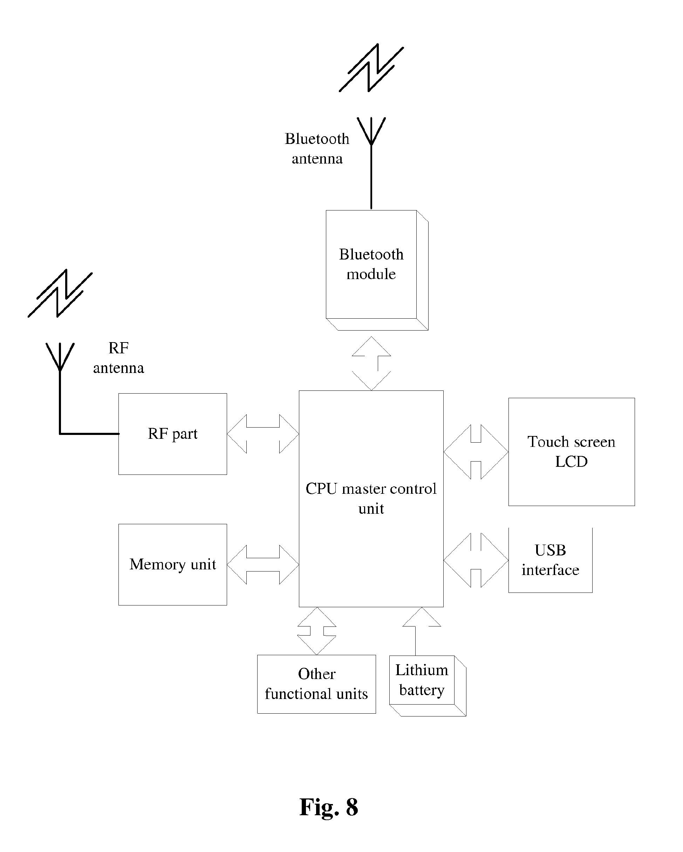

Fig. 8 is a diagram showing the composition principle of a mobile phone circuit according to a second embodiment of the present invention. As shown in Fig. 8, the mobile phone has a universal mobile phone structure. The master control unit of a Central Processing Unit (CPU) implements the operation control of the master control part of the mobile phone; a Radio Frequency (RF) part and an RF antenna part implement the receiving-sending function of an RF signal, and the voice communication, data communication and other RF circuit functions of the mobile phone; the master control program or each recorded file of the mobile phone is placed in a memory unit; a lithium battery module is a power supply of the mobile phone when it is at work and is configured to supply power to the whole mobile phone; a USB interface is configured to charge the mobile phone, download a program or provide a physical interface for a USB, and may be configured to be connected to a computer terminal in a wired way in the embodiment; and a Bluetooth module part is configured to be connected to other Bluetooth devices by Bluetooth, and may be configured to be connected to the computer terminal by Bluetooth in a wireless way so as to control a link physical layer wirelessly when the mobile phone serves as the mouse in the embodiment. A touch screen (Liquid Crystal Display) part, as a universal touch screen of the mobile phone, is the main interface for information input of the mobile phone. In the embodiment of the present invention, a touch medium touches and moves on the touch screen to implement the mobile input operation of a mouse cursor on the display screen of the corresponding computer terminal; moreover, the touch screen of the mobile phone is configured as left and right control areas to implement the division of left and right button areas; and the corresponding area is clicked or double-clicked to implement the click operation of left and right buttons of the mouse.

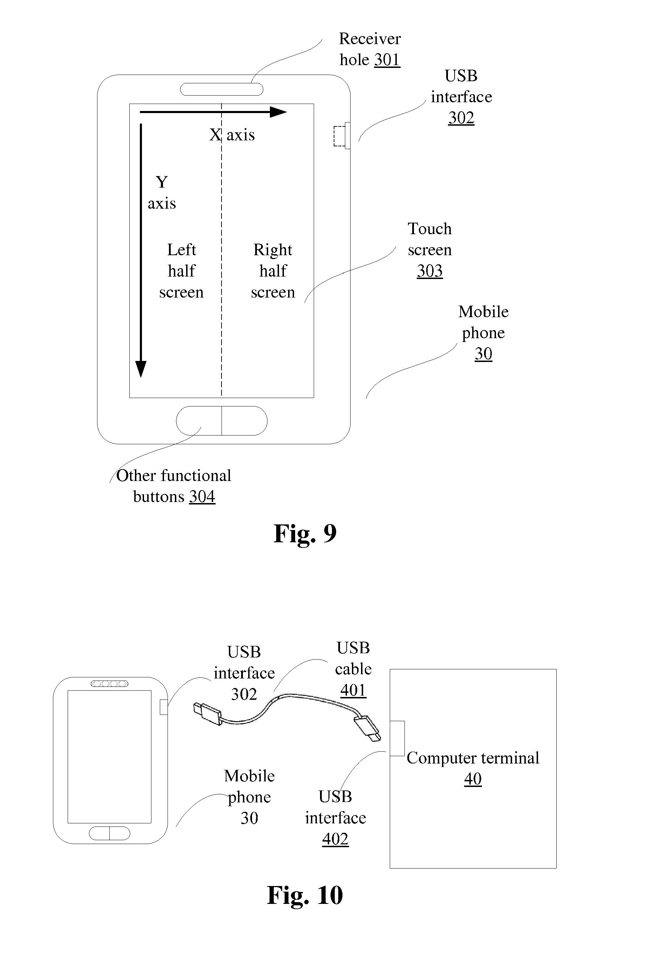

Fig. 9 is a diagram of a mobile phone with a mouse function according to a second embodiment of the present invention. In the mobile phone shown in Fig. 9, a touch screen 303 is located on the mobile phone 30; and 301 represents a receiver hole of the mobile phone, which is configured for a listener to receive voice during voice communication. A mobile phone on-off and other functional buttons 304 are below the touch screen or at other parts; the shell is provided with a USB interface 302, which is connected with the internal board of the mobile phone by a USB signal, so as to implement the USB connection function, program download function and charging interface function of the mobile phone.

Fig. 10 is a diagram showing the wired connection between a mobile phone and a computer terminal according to a second embodiment of the present invention. As shown in Fig. 10, when the whole mobile phone 30 is applied as a mouse, the USB interface 402 of a computer terminal 40 may be connected to the USB interface 302 of the mobile phone through a USB cable 401; and the USB connection cable is used as a wired physical link when the mobile phone serves as a mouse to control the computer terminal.

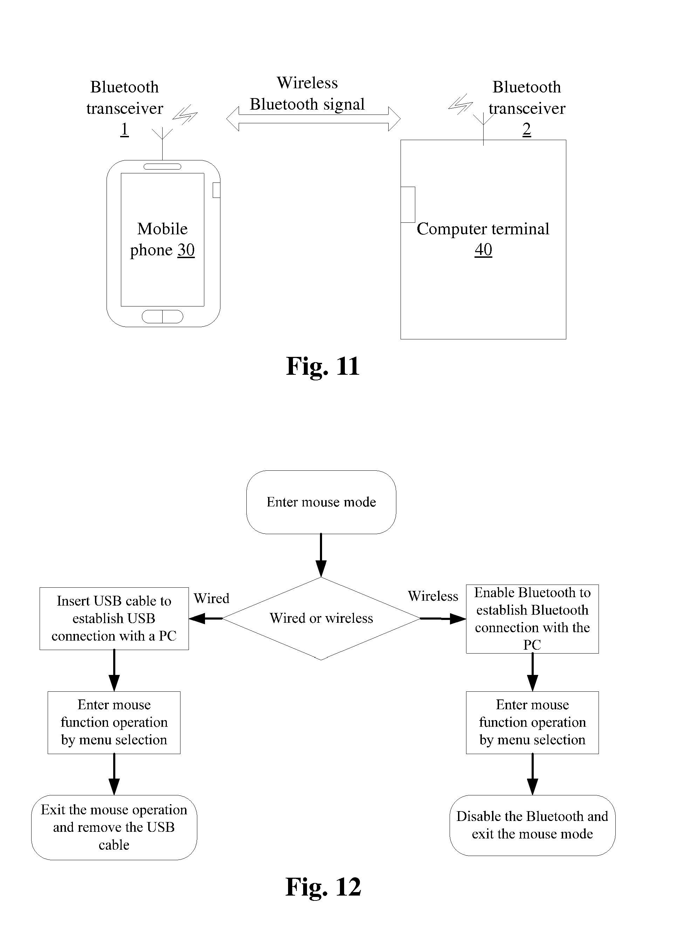

Fig. 11 is a diagram showing the wireless connection between a mobile phone and a computer terminal according to a second embodiment of the present invention. As shown in Fig. 11, a Bluetooth connection is established through the Bluetooth module of the mobile phone and the Bluetooth unit of the computer terminal; and the Bluetooth wireless link between the computer terminal and the mobile phone is a wireless control link provided when the mobile phone is operated as a mouse of the computer terminal. The Bluetooth unit of the computer terminal may be a Bluetooth functional module inside the computer terminal or an external Bluetooth adaptor.

Fig. 12 is a flowchart when a mobile phone serves as a mouse according to a second embodiment of the present invention. As shown in Fig. 12, usually, the mobile phone serves for its basic function and is in a standby mode or a communication mode. When its mouse function is applied, whether the mobile phone is connected in a wired way or in a wireless way is judged at first; if it is connected in a wired way, it is necessary to connect the mobile phone to the computer terminal through a USB cable; the mobile phone enters a wired mouse mode through a menu; the CPU master control unit inside the mobile phone carries out the corresponding drive action to control the mobile phone to enter the mouse operation mode and send a USB signal in a wired way; and after the mouse operation is completed, the USB cable may be removed and the mouse operation is ended. If it is connected in a wireless way, the Bluetooth functions of both the mobile phone and the computer terminal are enabled to establish Bluetooth connection between the mobile phone and the computer terminal; the mobile phone enters a wireless mouse mode through a menu; similarly, the CPU master control unit inside the mobile phone carries out the corresponding driving operation to control the mobile phone to enter a mouse operation mode and send a mouse signal in a wireless way; and after the mouse operation is completed, the Bluetooth is disabled and the mouse mode is ended. In the wired mouse connection way or the wireless mouse connection way, the RF unit part and the internal control section of the mobile phone are not affected. Therefore, the mobile phone may receive a call, a short message and the like normally and its normal operation is not affected. In addition, in the operation process, the display screen of the mobile phone is not required for display, so that the LCD can be in an off blank screen state. Accordingly, the power consumption is effectively reduced and the standby time of the whole mobile phone may be prolonged better.

The mobile phone is connected to the computer terminal in a wired or a wireless way. After a mobile phone user confirms on the menu, the driver of the mobile phone is loaded and the computer terminal is initialized, so that the mobile phone enters the mouse function mode to load software capable of carrying out the operation of the mouse cursor in the corresponding computer terminal. After the mobile phone enters the mouse function mode, namely, after the software of mouse function is loaded, a finger moves on the touch screen 303, wherein the movement speed, movement direction and movement distance of the finger are recorded and processed by the CPU master control unit inside the mobile phone through the touch screen; the mobile phone sends the corresponding movement data as well as the information carrying a movement control command to the computer terminal in a wired way or a Bluetooth wireless way; after receiving the data information of the movement speed, the movement direction and the movement distance, the computer terminal linearly converts all these movement information and operates the mouse cursor on own display screen to make a corresponding movement according to the received movement control command, so that the movement operation of mouse of the computer terminal is implemented.

In the actual application, as shown in Fig. 9, the touch screen of the mobile phone may be planned and configured as an X axis and a Y axis. The movement of a finger in the direction of X axis on the touch screen becomes the horizontal movement of the mouse on the computer terminal when mapped to the display screen of the computer terminal, while the movement of the finger in the direction of Y axis on the touch screen becomes the vertical movement of the mouse on the computer terminal when mapped to the display screen of the computer terminal. In the same manner, movement in different directions and angles on the touch screen of the mobile phone is implemented, so that the movement on the touch screen of the mobile phone may then be mapped to the movement of the mouse cursor with the corresponding movement distance and speed in the corresponding direction on the display screen of the computer terminal

In order to implement the click operation of left and right buttons of the mouse, the touch screen 303 of the mobile phone is divided into left and right symmetrical areas; it is stipulated that the left half screen area is configured as a left button area, namely, when a finger clicks or double-clicks the area, if the CPU master control unit in the mobile phone determines that the coordinate of the click/double-click operation is in the left half area of the whole touch screen by detection, the mobile phone sends the control command corresponding to the click/double-click of the left button to the computer terminal; and after receiving the corresponding control command, the computer terminal utilizes own mouse to execute the click/double-click operation of the corresponding left button. Thereby, the click/double-click operation of left button of the mouse in the computer terminal is implemented by the click/double-click operation in the left half area of the touch screen. The right half screen is configured as a right button area; when the area is clicked, if the CPU master control unit in the mobile phone determines that the coordinate of the click operation is in the right half area of the whole touch screen by detection, the mobile phone sends the control command corresponding to the right button to the computer terminal; and after receiving the command, the computer terminal utilizes own mouse to execute the operation instruction of the right button. Thereby, the click operation of right button of the mouse in the computer terminal is implemented by the click operation in the right half area of touch screen of the mobile phone.

By the method, the mobile phone is connected to the computer terminal in a wireless way or a USB wired way and enters the mouse mode; and the corresponding mouse control command may be sent to the computer terminal to implement the operation of the mouse cursor in the computer terminal. The movement distance and the movement speed of the finger in the directions of X axis and Y axis on the touch screen are linearly converted to be mapped to the horizontal or vertical movement in the display screen of the computer terminal. In such manner, the movement in other directions or angles may also be mapped to the display screen of the computer terminal to implement the movement operation of the mouse cursor. The left and right screen areas of the mobile phone are configured as a left button area and a right button area respectively. The mobile phone sends a left button operation command to the computer terminal when the left half screen is clicked and sends a right button operation command to the computer terminal when the right button area is clicked. Thereby, the mobile phone may control the movement and click operation of the mouse pointer in the screen of the computer terminal when operated as a mouse, so as to implement the function of the mouse. The whole screen touch process of the mobile phone does not rely on the display of display screen of the mobile phone, so that it is unnecessary to light the LCD. Accordingly, power is saved for the use of the whole mobile phone.

Through the embodiments of the present invention, when used as a mouse, the mobile phone with the mouse function is simple and practical to operate, does not increase the cost of hardware of the existing mobile phone nor rely on the placement location of an operation plane when being operated by the user, thereby having a great degree of spatial freedom and improving the user experience effectively. Moreover, as another user experience in the using process, the mobile phone can enrich the using scenario of the user and has a great market application value.

It can be seen from what described above that the present invention implements the following technical effects: the hand-held electronic terminal detects the touch on the touch-sensitive display, and generates a control command corresponding to the touch posture and sends the generated control command to the computer terminal to complete the input of mouse operating command if determining that the touch posture of the touch matches with the preset touch posture. Therefore, the computer terminal is controlled by the hand-held electronic terminal, and the mouse function is implemented by using the hand-held electronic terminal without increasing the cost of hardware. Moreover, in the embodiment of the present invention, unlike a universal mouse, the hand-held electronic terminal with the mouse function does not rely on the placement plane, has a great degree of spatial freedom, and is friendlier in the human-computer interaction and more appropriate to the ergonomics and operation habit. Moreover, when used as a mouse, it is high in sensitivity and simple to operate, adds another user experience for the hand-held electronic terminal and enriches the application scenario of the hand-held electronic terminal.

Obviously, those skilled in the art shall understand that the modules or steps of the present invention may be implemented by general computing apparatus and centralized in a single computing apparatus or distributed in a network consisting of multiple computing apparatus. Optionally, the modules or steps may be implemented by program codes executable by the computing apparatus, so that they may be stored in a storage apparatus and executed by the computing apparatus, and, in some cases, the steps may be executed in a sequence different from the illustrated or described sequence, or they are respectively made into the integrated circuit modules or many of them are made into a single integrated circuit module. By doing so, the present invention is not limited to any specific combination of hardware and software.

The above are only the preferred embodiments of the present invention and not intended to limit the present invention. For those skilled in the art, various modifications and changes can be made in the present invention. Any modifications, equivalent replacements, improvements and the like within the spirit and principle of the present invention shall fall within the scope of protection as defined in the appended claims of the present invention.

## Claims

1. A method for controlling a computer terminal, **characterized by** comprising:
detecting a touch on a touch-sensitive display of a hand-held electronic terminal;
judging whether a touch posture of the touch matches with a preset touch posture; and
if the touch posture of the touch matches with the preset touch posture, generating a control command corresponding to the touch posture and sending the control command to the computer terminal, wherein the control command is used for controlling the computer terminal to execute a click operation of a mouse and/or a movement operation of a mouse cursor.

2. The method according to claim 1, **characterized in that** the touch posture is a movement made along any direction during continuous touch on the touch-sensitive display; and generating the control command corresponding to the touch posture comprises:
acquiring parameter information of the movement, wherein the parameter information comprises: movement distance and movement direction, or, movement distance, movement direction and movement speed;
linearly increasing or decreasing the movement speed, or linearly increasing or decreasing the movement speed and the movement distance; and
generating the control command according to the movement direction and the linearly increased or decreased movement speed, or according to the movement direction and the linearly increased or decreased movement speed and movement distance.

3. The method according to claim 1, **characterized in that** when the touch posture is click or double-click, generating the control command corresponding to the touch posture comprises:
acquiring a location area of the touch posture on the touch-sensitive display; and
generating the control command corresponding to the location area and the touch posture.

4. The method according to claim 3, **characterized in that** generating the control command corresponding to the location area and the touch posture comprises:
if the location area is a first preset location area, generating a control command corresponding to the click or double-click of a right mouse button; and
if the location area is a second preset location area, generating a control command corresponding to the click or double-click of a left mouse button.

5. The method according to any one of claims 1 to 4, **characterized in that** after the control command is sent to the computer terminal, the method further comprises: the computer terminal receiving the control command and executing an operation corresponding to the control command.

6. The method according to claim 1, **characterized in that** the touch posture is a movement made along any direction during continuous touch on the touch screen; and after the control command is sent to the computer terminal, the method further comprises:
the computer terminal receiving the control command, wherein parameter information comprises: movement distance and movement direction, or, movement distance, movement direction and movement speed;
linearly increasing or decreasing the movement speed, or linearly increasing or decreasing the movement speed and the movement distance; and
moving the mouse cursor according to the movement direction and the linearly increased or decreased movement distance, or according to the movement direction and the linearly increased or decreased movement speed and movement distance.

7. The method according to claim 5, **characterized in that** before detecting the touch on the touch-sensitive display of the hand-held electronic terminal, the method further comprises: establishing a connection with the computer terminal.

8. An apparatus for controlling a computer terminal, **characterized by** comprising:
a detection module, which is configured to detect a touch on a touch-sensitive display of a hand-held electronic terminal;
a judgment module, which is configured to judge whether a touch posture of the touch matches with a preset touch posture;
a generation module, which is configured to generate a control command corresponding to the touch posture of the touch if a judgment result of the judgment module is that the touch posture of the touch matches with the preset touch posture, wherein the generated control command is used for controlling the computer terminal to execute a click operation of a mouse and/or a movement operation of a mouse cursor; and
a sending module, which is configured to send the generated control command to the computer terminal.

9. The apparatus according to claim 8, **characterized in that** the touch posture is a movement made along any direction during continuous touch on the touch-sensitive display; and the generation module comprises:
a first acquisition unit, which is configured to acquire parameter information of the movement, wherein the parameter information comprises: movement distance and movement direction, or, movement distance, movement direction and movement speed;
an increasing/decreasing unit, which is configured to linearly increase or decrease the movement speed, or linearly increase or decrease the movement speed and the movement distance; and
a first generation unit, which is configured to generate the control command according to the movement direction and the linearly increased or decreased movement speed, or according to the movement direction and the linearly increased or decreased movement speed and movement distance.

10. The apparatus according to claim 8, **characterized in that** the touch posture is click or double-click; and the generation module comprises:
a second acquisition unit, which is configured to acquire a location area of the touch posture on the touch-sensitive display; and
a second generation unit, which is configured to generate the control command corresponding to the location area and the touch posture.

11. The apparatus according to claim 10, **characterized in that** the second generation unit is configured to generate the control command corresponding to the location area and the touch posture in the following manner:
if the location area is a first preset location area, generating a control command corresponding to the click or double-click of a right mouse button; and
if the location area is a second preset location area, generating a control command corresponding to the click or double-click of a left mouse button.

12. The apparatus according to any one of claims 8 to 11, **characterized by** further comprising: an establishment module, which is configured to establish a connection with the computer terminal.

13. A system for controlling a computer terminal, **characterized by** comprising:
a hand-held electronic terminal, comprising the apparatus in any one of claims 8 to 12; and
the computer terminal, comprising a receiving module, configured to receive the control command; and an execution module, configured to execute an operation corresponding to the control command.

14. The system according to claim 13, **characterized in that** the touch posture is a movement made along any direction during continuous touch on the touch screen; parameter information carried in the control command comprises: movement distance and movement direction, or, movement distance, movement direction and movement speed;
the computer terminal further comprises: an increasing/decreasing unit, which is configured to linearly increase or decrease the movement speed, or linearly increase or decrease the movement speed and the movement distance; and
the execution module is further configured to move the mouse cursor according to the movement direction and the linearly increased or decreased movement distance, or according to the movement direction and the linearly increased or decreased movement speed and movement distance.
